Europäisches Patentamt

(19) European Patent Office

Office européen des brevets

(11) Publication number: **0 096 220**

**A2**

(12) # EUROPEAN PATENT APPLICATION

(21) Application number: **83104299.9**

(22) Date of filing: **02.05.83**

(51) Int. Cl.³: **H 04 N 1/41**

(30) Priority: **07.06.82 US 385748**

(43) Date of publication of application:
**21.12.83 Bulletin 83/51**

(84) Designated Contracting States:
**DE FR GB**

(71) Applicant: **International Business Machines Corporation**
**Old Orchard Road**
**Armonk, N.Y. 10504(US)**

(72) Inventor: **Kunzinger, Charles Anthony**
**Rt. 1, Box 138A**
**Morrisville, NC 27560(US)**

(72) Inventor: **Lasher, Dana Alfred**
**8613 Caswell Ct.**
**Raleigh, NC 27612(US)**

(72) Inventor: **Stelzenmuller, William Karl**
**Rt. 1, Box 126**
**Morrisville NC 27560(US)**

(74) Representative: **de Pena, Alain**
**COMPAGNIE IBM FRANCE Département de Propriété Industrielle**
**F-06610 La Gaude(FR)**

(54) **Gray scale image thresholding method.**

㉗ A method is described for reducing the amount of data that must be transmitted over a telecommunications link in order to generate an acceptable video image of a bilevel document at a remote monitor. Document data is captured at 8 bits/pel with a conventional video freeze-frame system. The captured data is normalized to eliminate variations due to camera settings, room lighting levels and the like. A table lookup process is used to threshold the data to 4 bits/pel with different single pel values being assigned to pels having normalized normalized values above or below set threshold values. The number of intermediate gray scale ranges is reduced. The thresholding process provides log strings of constant pel values while suppressing small nonuniformities in the document's background. The resultant data is optimized for run length compression and the image quality is improved. At the receiver, a second table lookup process is used to define playback values. To provide optimum contrast between characters and background, the table lookup values at the receiver may be different from those used in the compression process.

GRAY SCALE IMAGE THRESHOLDING METHOD

## Technical Field

The invention relates to gray scale image encoding techniques, and more particularly to a gray scale image thresholding technique for use on bilevel document in image transmission applications such as teleconferencing applications.

## Background of the Invention

Because of rising travel costs, there has been an increasing interest in the use of teleconferencing systems for the conduct of business meetings. In a typical teleconferencing system, two groups of people in different cities or countries meet in special teleconferencing rooms. The rooms normally include a room camera for providing a wide angle view of the people, a document camera which can be focussed on letters, drawings and other business or technical documents, a room monitor for permitting the people in one room to see those in the other room and a document monitor for allowing each group to view documents presented by the other group. Communications between the two rooms are carried over conventional teleprocessing links, such as leased or switched telephone lines or satellite communications links. The actual cost of transmitting data over teleprocessing links is a function of the amount of bandwidth that must be utilized. For that reason, there has been a desire to use a minimum amount of bandwidth in teleconferencing applications. One way to reduce bandwidth requirements in teleconferencing systems is through the use of freeze-frame techniques. Audio communications are continuously maintained. However, the room image in a freeze-frame system is updated only periodically (every 15-30 seconds) and is "frozen" on the receiving monitor between updates. The document image is updated only when the person presenting the document pushes a "send" button in the teleconferencing room.

Transmission delay for the document image is an important parameter for a teleconferencing system. Delays exceeding several seconds will produce unnatural pauses in the smooth flow of a business meeting. One way to maintain a low transmission delay over a narrow bandwidth (i.e., low cost) communication channel is to employ data processing techniques to compress the image data at the transmitting location and decompress the image data at the receiving location.

A standard TV camera can be used as an input device. One known technique for effectively transmitting document data used in facsimile systems is to reduce the input data to bilevel and to run-length compress the data. However, this techniques requires spatial sampling density exceeding that of the standard (low cost) TV camera. The standard TV camera is an attractive input device for teleconferencing since it can capture images of documents or photographs, or objects, etc.

## Summary of the Invention

This invention presents a thresholding method which when used in conjunction with standard compression/decompression techniques, significantly improves the transmission delay for bilevel (black and white) business documents.

The present invention is a method which reduces the number of gray scale values assignable to a nominally bilevel document that has been scanned by a gray scale device such as a video camera, and positions the newly assigned gray scale values so as to optimize the data for subsequent run length compression.

The present invention is a data thresholding method for reducing the number of gray scale levels assignable to a document which has been scanned by a gray scale device capable of producing pels having a predetermined number of different values, said method being characterized by the steps of :

combining all pel values less than a first threshold value
into a common background range;

assigning a first common value to any pel having a value
falling within the background range;

combining all pel values greater than a second threshold value
into a common character range;

assigning a second common value to any pel having a value
falling within the character range; and

establishing a fixed number of gray scale ranges for all pel
values between the first and second threshold values.

In the prior art technique, dense sampling allowed bilevel
thresholding, while in the subject technique, gray scale
values are preserved in order to produce a good quality
output from coarsely sampled input. This allows the use of a
flexible low cost TV camera as an input device.

## Brief Description of the Drawings

While the specification concludes with claims particularly
pointing out and distinctly claiming that which is regarded
as the present invention, details of preferred embodiments
of the invention may be more readily ascertained from the
following detailed description when read in conjunction with
the accompanying drawings wherein :

Figure 1 is a general block diagram of a teleconferencing
system in which the inventive method may be practiced;

Figure 2 is a flow chart of the basic method steps which
would be performed at the transmitting end of the teleconferencing system;

Figure 3 is a flow chart of the basic method steps which would be performed at the receiving end;

Figure 4 is a pel histogram of a typical document showing actual, normalized and thresholded pel values; and

Figure 5 is a more detailed flow chart of the operations which would be performed when carrying out the inventive method.

## Detailed Description

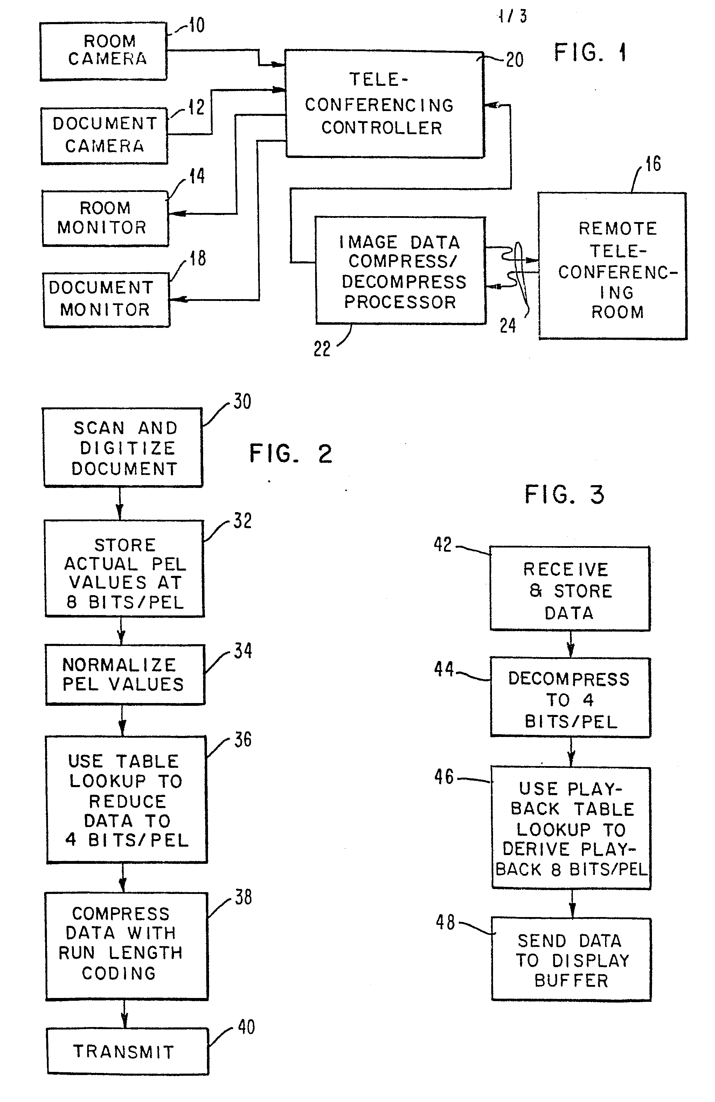

Referring to Figure 1, a typical teleconferencing room includes a wall-mounted room camera 10 providing a wide angle view of the room. The room also includes a document camera 12 having a relatively narrow field of view, focussed at a surface on which documents to be scanned would be placed. The room also includes a room monitor 14 allowing people in the room to see those in a similarly equipped, remote teleconferencing room 16. The first room also includes a separate document monitor 18 for viewing any documents scanned by a document camera in the remote room 16.

The storage and transfer of video images captured by cameras 10 and 12 and the buffering of video signals to be applied to monitors 14 and 18 is handled by a conventional teleconfe-rencing controller 20. An image data compression/decompression processor 22 serves as an interface between the teleconferencing controller 20 and a teleprocessing link 24, which may be leased or switched lines or a satellite system link. Processor 22, which may be a programmed conventional microprocessor, manipulates the video image data stored in teleconferencing controller 20 to reduce or compress that data prior to transmission over link 24. Processor 22 also decompresses information received from the remote teleconferencing room over the link 24 before passing that information to teleconferencing controller 20 for distribution to the monitors 14 and 18. The method disclosed and claimed herein is preferably implemented by a permanent program created in read only storage for the processor 22.

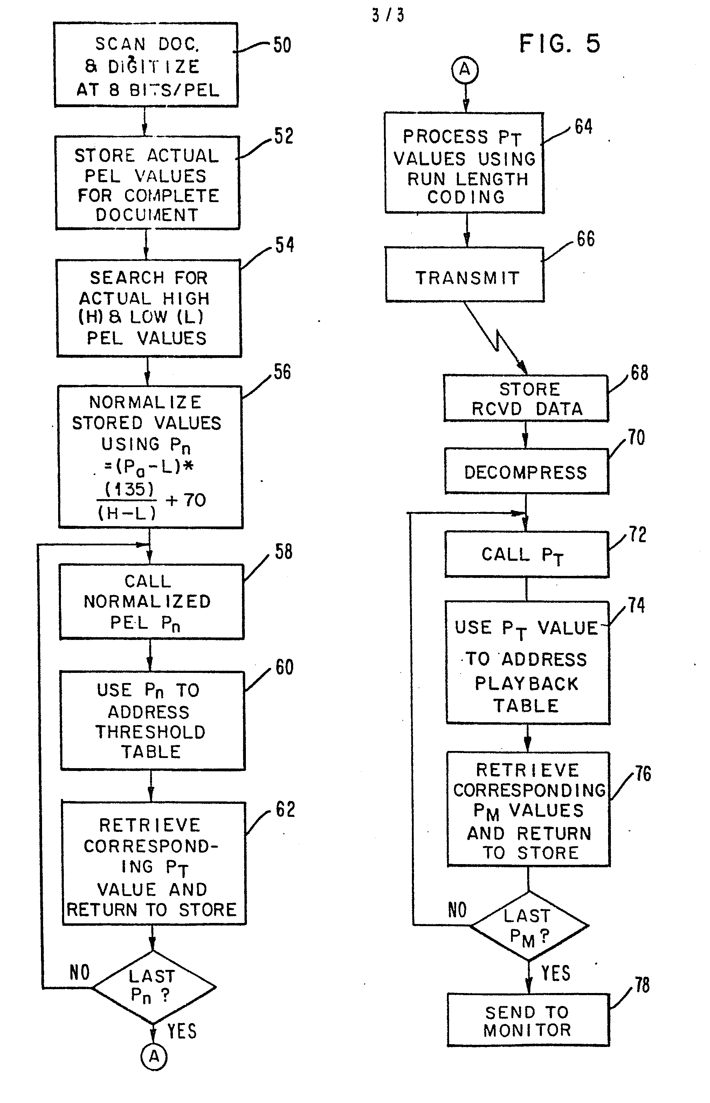

The method steps performed at the transmitting end of a teleprocessing link are briefly described with reference to Figure 2. The steps will be described in greater detail with refrence to a later figure. When a document has been scanned (operation 30) by document camera 12, an actual value for each pel is stored (operation 32) at a gray scale resolution of 8 bits per pel. Any given pel may have a value ranging from 0 (pure white) to 255 (pure black), although almost all pels will have values falling within a much narrower range between these two limits. In a preferred embodiment of the invention, the actual pel values are normalized (operation 34) to compensate for variations in room lighting, document background level, camera settings and the like. A preferred equation for performing normalization on a pel by pel basis will be described in more detail later with reference to Figure 5. The normalization procedure establishes upper and lower limits for the pel values and is desirable because it eliminates the effects of different camera settings, lighting levels, etc. at different teleconferencing installations.

When all of the captured pel values have been normalized, a table lookup process is used (operation 36) to reduce the normalized data to a gray scale resolution of 4 bits per pel. Table I below indicates the correspondence between the 8 bit normalized pel values which provide the input for the table lookup process and the 4 bit or thresholded pel values which are the output from the table lookup process.

| NORMALIZED<br>PEL VALUES<br>(8 BITS/PEL) | THRESHOLDED<br>PEL VALUES<br>(4 BITS/PEL) | DESCRIPTION |
|---|---|---|
| 000 - 110 | 0 | WHITE |
| 111 - 114 | 1 | LIGHT GRAY |
| 115 - 118 | 2 | . |
| 119 - 122 | 3 | . |
| 123 - 126 | 4 | . |
| 127 - 130 | 5 | . |
| 131 - 134 | 6 | . |
| 135 - 138 | 7 | . |
| 139 - 142 | 8 | . |
| 143 - 146 | 9 | . |
| 147 - 150 | 10 | . |
| 151 - 154 | 11 | . |
| 155 - 158 | 12 | . |
| 159 - 162 | 13 | DARK GRAY |
| 163 - 255 | 14 | BLACK |

TABLE I

It will be noted that there are two extremely large ranges of 8 bit values which are converted into single 4 bit values. Specifically, any pel having a normalized value within the range 000 - 110 is assigned a value of 0 in the table lookup process. At the opposite end of the spectrum, any normalized pel value of 163 - 255 is assigned a 4 bit thresholded value of 14. Normalized pel values in the range of 111 - 162 are assigned to one of 13 intermediate thresholded pel values which cover the luminance range from light gray to dark gray. The intermediate pel values have been found to be necessary for a documents sampled at low resolution since a nominally bilevel document actually contains intermediate gray scale pels at the edges of characters and lines. The omission of intermediate gray scale levels could produce significant character distortion.

By coding all pel value below 110 to a single new value of 0, the subject technique produces a uniform background luminance, thus improving the quality of the image. Even more importantly, the subject technique produces many long strings of constant value pels, which is ideal for efficient run length compression.

Similarly, coding all pel values above 163 to a single pel value (14) provides the same results for the black characters, namely long strings of compressible data.

After the data has been reduced to a gray scale resolution of 4 bits per pel in accordance with Table I, it may be compressed in accordance with conventional run length coding techniques (operation 38) before being transmitted (operation 40) over the teleprocessing link 24.

Figure 3 shows the basic steps which would be performed at the remote teleconferencing room 16. The compressed data is received and stored (operation 42) before being decompressed in a process (operation 44) which would be the inverse of any run length coding process performed in operation 38. To provide optimum contrast between background and the characters of displayed documents and to suppress contouring effects, the decompressed data at 4 bits per pel is converted to data at 8 bits per pel using a nonlinear playback table lookup process (operation 46) in which the table values are different from those used in the data compression operation 36. Preferred playback table lookup values are shown in Table II below.

| DECOMPRESSED PEL VALUES (4 BITS/PEL) | PLAYBACK PEL VALUES (8 BITS/PEL) |
|---|---|
| 0 | 90 |
| 1 | 92 |
| 2 | 94 |
| 3 | 96 |
| 4 | 98 |

| | |
|---|---|
| 5 | 102 |
| 6 | 106 |
| 7 | 110 |
| 8 | 114 |
| 9 | 118 |
| 10 | 122 |
| 11 | 127 |
| 12 | 132 |
| 13 | 137 |
| 14 | 142 |

TABLE II

It will be noted that Table II is non-linear. That is, the differences between successive 8 bit playback values are small in the light gray range and are larger in the dark gray range. This table structure tends to reduce a form of image distortion known as contouring due to shading variations.

Data resulting from the table lookup process is transmitted to a display buffer (operation 48) for the document monitor in the receiving teleconferencing room.

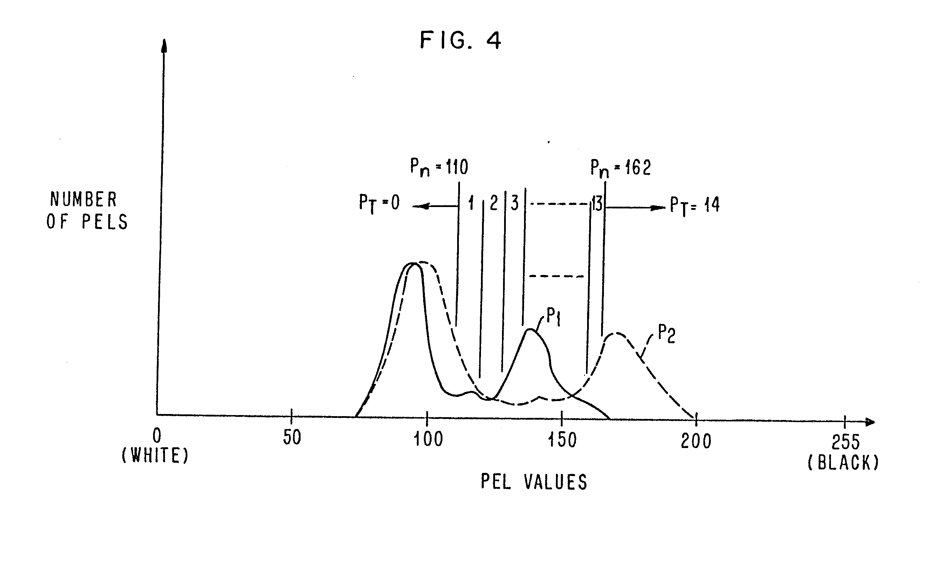

Figure 4 shows the actual distribution of (original) pel values, the normalized pel values and the thresholded pel values for a typical business document with black printing on a white background. The document has been scanned by a gray scale television camera capable of differentiating between 256 (0-255) levels of gray theoretically ranging from pure white to pure black. The histogram $P_1$ of the actual pel value detected by the camera typically ranges from approximately 70 at the light end to 170 at the dark end. It will be noted that there is a large peak centered at a pel value of approximately 100. This peak represents the pel values for the white background region of the document. A second large peak centered at a pel value of approximately 140 represents the black character pels on the document. The pels between the two peaks may be produced by transitions at the edges of characters or by imperfections such as smudges.

Actual (captured) pel values are preferably normalized in accordance with the following equation.

$$P_n = (P_a - L) * (N_h-N_1)/(H-L) + 70 \qquad (Eq. 1)$$

Where

$P_n$ = normalized pel value
$P_a$ = actual pel value
$L$ = lowest actual pel value
$H$ = highest actual pel value
$N_h$ = upper limit of normalized range
$N_1$ = lower limit of normalized range

The effect of the normalization process is to spread the histogram over a range between $N_1$ and $N_h$ pels. In a preferred embodiment of the invention $N_h$ and $N_1$ have been chosen equal to 205 and 70, respectively. A normalized histogram $P_2$ is shown in Figure 4.

The thresholding process described as operation 36 operated on the normalized pel values represented by histogram $P_2$. It will be seen that all pels having a normalized value of less than 110 are assigned a threshold value of 0 while all pels having a value of 163 or greater are assigned a threshold value of 14. The use of the large ranges for the background peak tends to eliminate any variations in shading which may occur in the background. Those pels having values between 110 and 163 are assigned to one of 13 intermediate gray scale ranges. This technique produces long strings of identical pels, which are well suited for run length compression.

The data processing steps which are actually performed at transmitting and receiving teleconferencing installations employing the present invention are described in greater detail in Figure 5. As mentioned before, the document is scanned (operation 50) with a low resolution gray scale camera. The camera output is digitized to a resolution of 8 bits per pel.

The actual pel values resulting from the scan document are stored (operation 52). A search is performed (operation 54) for the highest (H) and lowest (L) pel values detected by the document camera. Equation 1 is used (operation 56) to normalize the stored pel values. The thresholding process is performed by calling the normalized pel values one at a time (operation 58) and by using the normalized values to address (operation 60) the threshold table set forth in Table I above. The 4 bit threshold pel value $P_t$ addressed by the $P_n$ value is returned to storage (operation 62) in a memory location corresponding to that occupied by the normalized pel value which it replaces. Operations 58, 60 and 62 are repeated for succeeding pel values until the last pel has been normalized.

Conventional run length coding techniques can then be employed (operation 64) to further reduce the amount of data which must be transmitted. The use of the thresholding process described above greatly enhances the effectiveness of typical run length coding techniques. The run length coded data is then transmitted using conventional signaling protocols (operation 66) to the remote teleconferencing installation where it is received and stored (operation 68). The data is decompressed (operation 70) in a process which is the inverse to any run length coding process employed in operation 64. The end result of decompression process will be an array of $P_t$ values corresponding to those derived in operation 62 at the transmitter. The $P_t$ values are called (operation 72) and are used to address the playback table (operation 74), one embodiment of which is defined by Table II above. The playback or monitor pel values $P_m$ are retrieved (operation 76) and returned to storage locations corresponding to the storage locations of the threshold pel values $P_t$ which they replace. When the playback conversion process defined by operations 72, 74 and 76 is complete, the data is forwarded to the monitor (operation 78) for presentation on the document monitor at the receiving teleconferencing installation.

A table lookup process (operations 60 and 62) is described above for changing the pel coding from 8 bits per pel to 4 bits per pel. The conversion operation may also be performed on a pel-by-pel computation basis once the background pel value of 110 has been assigned to any pel having a value less than 111 and the character pel value of 163 has been assigned to any pel having a value greater than 162.

Once these values have been assigned, the 4 bit values for all 8 bit pel values can be computed on a pel-by-pel basis as

$$P_t = (P_n - 107)/4 \qquad\qquad \text{Eq. (2)}$$

with any fractional $P_t$ values being rounded down.

Further, it may be advantageous to calculate $P_t$ values directly from actual $P_a$ values by merging Equations 1 and 2 into a single equation.

Finally, while the foregoing description has been for processing of a document consisting of black characters on a white background, the same process steps can be used for processing documents having white characters on a black background. The limits of the background and character pel sets are changed slightly for white on black documents. Any pel having a value less than 81 is set to 80 and any pel having a value greater than 132 is set to 133 for such a document. These values, like the values used in other equations, are empirically derived.

While there has been described what are considered to be preferred embodiments of the invention, further variations and modifications therein will occur to those skilled in the art once they become acquainted with the basic concepts of the invention. Therefore, it is intended that the appended claimed shall be construed to include both the preferred embodiment and all such variations and modifications as fall within the true spirit and scope of the invention.

## CLAIMS

1.  A data thresholding method for reducing the number of gray scale levels assignable to a document which has been scanned by a gray scale device capable of producing pels having a predetermined number of different values, said method being characterized by the steps of :

combining all pel values less than a first threshold value into a common background range;

assigning a first common value to any pel having a value falling within the background range;

combining all pel values greater than a second threshold value into a common character range;

assigning a second common value to any pel having a value falling within the character range; and

establishing a fixed number of gray scale ranges for all pel values between the first and second threshold values.

2.  A method  as defined in Claim 1 characterized in that it further includes the initial step of normalizing captured pel data in accordance with the following equation in order to reduce variations in captured data values caused by differences in room lighting levels, camera settings and the like :

$$P_n = (P_a - L) * (N_h - N_l)/(H-L) + N_l$$

where

$P_n$ is the normalized pel value;

$P_a$ is the original pel value;

L is the lowest pel value in the captured data;

H is the highest pel value in the captured data;

$N_h$ is the maximum normalized pel value; and

$N_l$ is the minimum normalized pel value.

3.   A method as defined in Claim 1 characterized in that
     the steps of assigning pel values are performed by
     using the captured pel data values to access a first
     stored table having corresponding assigned pel values.

4.   A method as defined in Claim 2 characterized in that
     the steps of assigning pel values are performed by
     using the normalized pel data values to access a first
     stored table having corresponding assigned pel values.

5.   A method including the steps defined by either of
     Claims 3 and 4 and characterized in that it includes
     the additional step of decoding data at a receiving
     location by using pel data values to access a second
     stored table having corresponding assigned pel values.

6.   A method as defined in Claim 5 characterized in that
     the pel values stored in the second table are different
     from those stored in the first table for the same input
     pel values.

7.   A method as defined in Claim 6 characterized in that in
     the incremental differences between pel values stored
     in the second table are non-linear with the incremental
     differences being smallest for pel values representing
     background areas of a document.

8.   A method as defined in Claim 7 characterized in that
     the nonlinear incremental differences are chosen to
     suppress contouring effects in the recreated image.

9. A method as defined in Claim 7 characterized in that the nonlinear incremental differences are chosen to enhance contrast between the background and the text of a received image.

FIG. 1

ROOM CAMERA — 10

DOCUMENT CAMERA — 12

ROOM MONITOR — 14

DOCUMENT MONITOR — 18

TELE-CONFERENCING CONTROLLER — 20

IMAGE DATA COMPRESS/ DECOMPRESS PROCESSOR — 22

REMOTE TELE-CONFERENC-ING ROOM — 16

24

FIG. 2

SCAN AND DIGITIZE DOCUMENT — 30

STORE ACTUAL PEL VALUES AT 8 BITS/PEL — 32

NORMALIZE PEL VALUES — 34

USE TABLE LOOKUP TO REDUCE DATA TO 4 BITS/PEL — 36

COMPRESS DATA WITH RUN LENGTH CODING — 38

TRANSMIT — 40

FIG. 3

RECEIVE & STORE DATA — 42

DECOMPRESS TO 4 BITS/PEL — 44

USE PLAY-BACK TABLE LOOKUP TO DERIVE PLAY-BACK 8 BITS/PEL — 46

SEND DATA TO DISPLAY BUFFER — 48

# FIG. 4

NUMBER OF PELS

$P_n = 110$
$P_n = 162$

$P_T = 0$ ← 1 | 2 | 3 ⎯⎯⎯ 13 → $P_T = 14$

$P_1$
$P_2$

0
(WHITE)
50
100
150
200
255
(BLACK)

PEL VALUES

2/3

0096220

FIG. 5

SCAN DOC. & DIGITIZE AT 8 BITS/PEL — 50

STORE ACTUAL PEL VALUES FOR COMPLETE DOCUMENT — 52

SEARCH FOR ACTUAL HIGH (H) & LOW (L) PEL VALUES — 54

NORMALIZE STORED VALUES USING $P_n = (P_a - L) * \dfrac{(135)}{(H-L)} + 70$ — 56

CALL NORMALIZED PEL $P_n$ — 58

USE $P_n$ TO ADDRESS THRESHOLD TABLE — 60

RETRIEVE CORRESPONDING $P_T$ VALUE AND RETURN TO STORE — 62

LAST $P_n$ ? — NO / YES

(A)

(A)

PROCESS $P_T$ VALUES USING RUN LENGTH CODING — 64

TRANSMIT — 66

STORE RCVD DATA — 68

DECOMPRESS — 70

CALL $P_T$ — 72

USE $P_T$ VALUE TO ADDRESS PLAYBACK TABLE — 74

RETRIEVE CORRESPONDING $P_M$ VALUES AND RETURN TO STORE — 76

LAST $P_M$ ? — NO / YES

SEND TO MONITOR — 78